# FASCICULE DE BREVET EUROPEEN

(11) **EP 0 961 702 B1**
(45) Date de publication et mention de la délivrance du brevet: **05.03.2003**
(21) Numéro de dépôt: 98962538.9
(22) Date de dépôt: 22.12.1998
(51) Int. Cl.: B60H 3/06, B01D 46/52

(54) **DISPOSITIF DE FILTRATION DESTINE A EQUIPER UN APPAREIL D'AERATION ET/OU DE CHAUFFAGE ET/OU DE CLIMATISATION, PLUS PARTICULIEREMENT POUR UN VEHICULE**
FILTEREINRICHTUNG FÜR BELÜFTUNGS-, HEIZUNGS- UND/ODER KLIMAANLAGEN, INSBESONDERE FÜR KRAFTFAHRZEUGE
FILTERING DEVICE FOR EQUIPPING A VENTILATION AND/OR HEATING AND/OR AIR CONDITIONING UNIT, MORE PARTICULARLY FOR A MOTOR VEHICLE

(30) Priorité: 22.12.1997 FR 9716262
(43) Date de publication de la demande: 08.12.1999
(73) Titulaire: VALEO, 75848 Paris Cédex 17 (FR)
(72) Inventeur: GUERIN, Richard, F-61100 Ronfeugerai (FR); NAVARRO, Claude, F-61100 Breel (FR); JACQ, Gérard, F-61430 Athis-de-l'Orne (FR)
(74) Mandataire: Lemaire, Marc
(86) Numéro de dépôt international: FR9802816
(87) Numéro de publication internationale: WO99032311

(56) Documents cités:
- EP-A- 0 383 236
- WO-A-93/12858
- WO-A-98/17368
- DE-A- 2 820 313
- DE-A- 3 815 907
- DE-A- 4 039 288
- US-A- 4 731 135
- US-A- 5 509 950
- US-A- 5 630 940
- US-A- 5 679 122

## Description

La présente invention a pour objet un dispositif de filtration destiné à équiper un appareil d'aération et/ou de chauffage et/ou de climatisation, plus particulièrement pour un véhicule.

Un tel dispositif est décrit dans les documents DE A 40 39 288 et EP A 0 383 236.

Plus précisément dans le document DE A 40 39 288, conforme au préambule de la revendication 1, le cadre comporte au moins deux parois longitudinales sur lesquelles sont fixées les extrémités d'un média filtrant plissé. Les parois sont souples en sorte que l'on peut vriller le dispositif de filtration pour l'introduire dans son logement associé.

Pour soutenir le média filtrant et donc améliorer l'efficacité et la durée de vie du dispositif de filtration on peut songer à doter ce dispositif d'une grille plissée comme décrit dans le document EP A 0 383 236. Le cadre est moulé sur l'ensemble média filtrant grille.

Cette disposition conduit à augmenter l'épaisseur du cadre au détriment de la souplesse du dispositif de filtration.

L'invention a pour objet d'améliorer l'efficacité et la durée de vie d'un tel dispositif de filtration tout en ayant la plus grande souplesse souhaitée, notamment pour rendre plus facile le changement du dispositif de filtration quand celui-ci est encrassé.

Conformément à l'invention ce problème est résolu par la partie caractérisante de la revendication 1.

Ce dispositif peut également comporter l'une ou l'autre des caractéristiques suivantes ainsi que toutes leurs combinaisons techniquement possibles :
- le média filtrant est formé d'un mat de non tissé constitué d'un voile de carde est appliqué contre ladite grille et forme un filtre à particules;
- ledit mat de non tissé constitué d'un voile de carde est appliqué contre ladite grille sans lui être solidarisé;
- ledit voile de carde forme une nappe unique ;
- ledit voile de carde est placé en amont de la grille en considérant le sens normal de passage du gaz à filtrer;
- le dispositif de filtration comporte des moyens d'absorption de gaz placés entre la grille et ledit mat de non tissé;
- lesdits moyens d'absorption comportent un tissu de carbone activé;
- ledit tissu de carbone est souple;
- lesdits moyens d'absorption comportent un lit de charbon activé;
- un mat de non tissé constitué d'un voile de carde est disposé de part et d'autre des moyens d'absorption;
- une seconde grille, dite grille d'entrée, est disposée en amont du mat de non tissé;
- les deux grilles sont de même nature;
- les deux grilles sont de natures différentes;
- une partie au moins des dimensions du tissu de carbone, et de préférence toutes, sont inférieures à celles correspondantes de la ou des grille(s) ainsi qu'à celles du cadre en sorte que, pour un côté au moins du tissu de carbone, celui-ci est, au moins partiellement, écarté du cadre;
- de préférence les deux grilles sont plissées;
- ledit mat de non tissé est plissé;
- ledit tissu de carbone est plissé;
- ladite grille est en polypropylène;
- ladite seconde grille est en polypropylène;
- ledit mat de non tissé est à base de fibres longues dont la longueur est, de préférence, au moins égale à 38 mm;
- lesdites fibres longues présentent un diamètre moyen égal ou supérieur à 10 µm;
- lesdites fibres sont en matériau thermoplastique;
- lesdites fibres sont des fibres de polypropylène;
- ledit cadre est en mousse de polypropylène;
- ledit cadre est solidarisé à la grille ainsi qu'à ladite seconde grille par soudure miroir;
- tout ou partie des extrémités latérales de ladite grille sont recourbées de manière à suivre la ou les parois correspondantes dudit cadre.

Le dispositif de filtration selon l'invention présente une meilleure efficacité et oppose une plus faible perte de charge à l'air à filtrer que les filtres de l'état de la technique.

Par ailleurs, le dispositif de filtration selon l'invention se présente avantageusement sous la forme d'une cassette souple susceptible d'être déformée temporairement dans tous les sens lors de son insertion, ou de son retrait, dans un appareil d'aération et/ou de chauffage et/ou de climatisation, ce qui facilite considérablement les opérations correspondantes, notamment lorsque l'accessibilité au logement du dispositif de filtration n'est, comme c'est dans la plupart des cas, pas aisée.

Grâce à la constitution du dispositif de filtration selon l'invention et notamment à la soudure miroir du cadre avec la grille, l'assemblage des différentes parties de celui-ci peut s'effectuer sans utilisation de solvant ni de colle tout en obtenant une excellente étanchéité entre le cadre et les différentes parties actives du filtre.

La souplesse du cadre permet avantageusement un montage étanche à la périphérie de celui-ci sans qu'il soit besoin de disposer un joint d'étanchéité.

De plus, la souplesse du cadre contribue à empêcher et absorber les vibrations et bruits au niveau du filtre ainsi que dans le conduit où il est placé.

Après usage, le dispositif de filtration selon l'invention peut aisément être recyclé après la séparation de ses constituants qui est facilitée en particulier quand le tissu de carbone n'est pas en contact avec le cadre.

D'autres caractéristiques et avantages de l'invention apparaîtront dans la description ci-après d'exemples de réalisations, en référence aux dessins annexés qui représentent :
- à la figure 1, une vue schématique partielle, en coupe, d'un dispositif de filtration selon l'invention;
- à la figure 2, une vue similaire à celle de la figure 1, correspondant à un autre mode de réalisation de l'invention;
- à la figure 3, une vue de face du dispositif de filtration de la figure 2;
- aux figures 4 et 5, des vues schématiques montrant la solidarisation d'une grille au cadre du dispositif de filtration;
- aux figures 6a et 6b, une illustration des propriétés de souplesse du filtre;
- aux figures 7 et 8, une représentation schématique de la fabrication du dispositif de filtration selon l'invention.

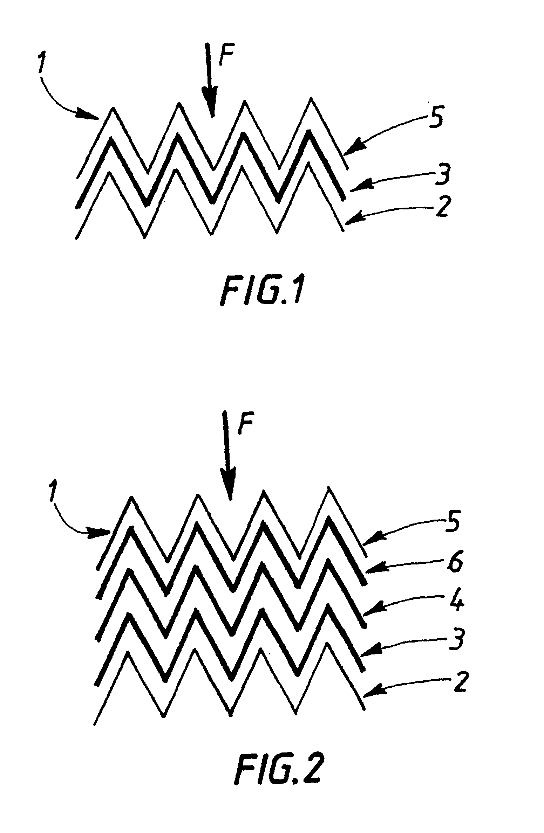

Le dispositif de filtration 1 de la figure 1 comporte une grille souple 2 plissée contre laquelle est disposé, sans lui être solidarisé, un média filtrant 3 formant filtre à particules, formé d'un mat de non tissé constitué d'un voile de carde en une nappe unique. Le média filtrant 3 est lui-même plissé de la même manière que la grille 2.

Ledit mat de non tissé est à base de fibres longues dont la longueur est, de préférence, au moins égale à 38 mm. Lesdites fibres longues présentent un diamètre moyen égal ou supérieur à 10 µm. Lesdites fibres sont en matériau thermoplastique et, en pratique, en polypropylène.

La grille 2 est en polypropylène. Elle se trouve placée en aval par rapport au sens F de circulation de l'air dans le dispositif de filtration.

Selon l'exemple de la figure 1, une seconde grille souple 5 plissée est prévue en sorte que le média filtrant 3 se trouve placé entre les grilles 2 et 5 sans être solidarisé ni à l'une ni à l'autre des deux grilles 2 et 5.

De préférence, la seconde grille dite d'entrée est placée en amont du média 3 selon le sens F de circulation de l'air dans le dispositif de filtration.

Avantageusement, La seconde grille 5 est de même nature que la grille 2 et est en polypropylène.

En variante, les deux grilles 2 et 5 sont de natures différentes.

Le dispositif de filtration de la figure 1 constitue un filtre à particules.

L'invention concerne aussi un filtre dit combiné, c'est-à-dire à la fois un filtre à particules et un filtre arrêtant des gaz délétères.

Dans ce cas, à la structure de base de la figure 1 constituée de la grille aval 1 et du média 3, sont ajoutés des moyens d'absorption de gaz 4 placés entre la grille 2 et le média 3 en sorte d'avoir la succession suivante, dans le sens F de circulation de l'air : le média 3, les moyens d'absorption de gaz 4 et la grille souple 2 en aval.

La figure 2 présente un filtre combiné comportant successivement dans le sens F de circulation de l'air : une grille d'entrée 5, un média 6, des moyens d'absorption de gaz 4, un média 3 et une grille de sortie 2. Les médias 3 et 6 sont avantageusement de la même nature, comme celle décrite précédemment. De la sorte, deux mats de non tissé 3 et 6 constitués chacun d'un voile de carde sont disposés respectivement de part et d'autre des moyens d'absorption de gaz 4.

Lesdits moyens d'absorption de gaz 4 peuvent comporter un lit de charbon activé, mais de préférence, comme représenté à la figure 2, ils comprennent un tissu de carbone souple plissé de la même manière que la grille 2 ou 5 et que le média 3 ou 6.

Le dispositif de filtration de la figure 2 présente une construction symétrique qui permet avantageusement son montage indifféremment dans un sens ou l'autre dans un appareil de chauffage et/ou ventilation et/ou climatisation, ce qui rend inutile de prévoir, dans ce cas, un détrompeur pour le sens de montage. Le dispositif de filtration est ainsi réversible. Bien entendu, dans ce cas, la grille d'entrée peut jouer le rôle de grille de sortie et, inversement, la grille de sortie jouer le rôle de grille d'entrée.

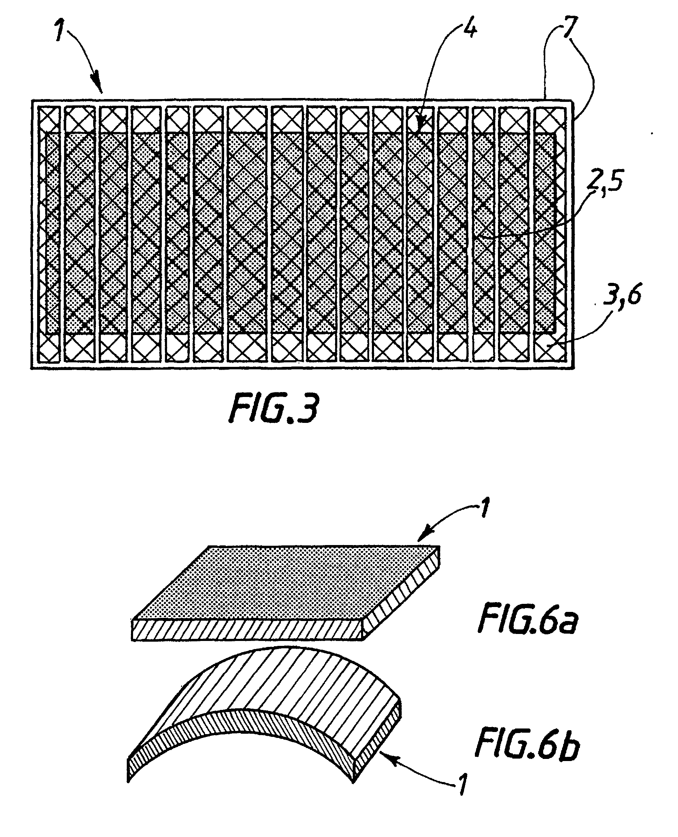

Un cadre souple est prévu pour supporter les différents constituants du dispositif de filtration. Un tel cadre souple est montré en 7 sur la figure 3. Dans cette figure 3 on voit que les grilles 2,5 sont entourées par le cadre 7 de forme rectangulaire. Bien que cette figure 3 corresponde au mode de réalisation de la figure 2, les dispositions relatives au cadre qui vont être décrites ci-après s'appliquent également à d'autres modes de réalisation et en particulier à celui décrit en regard de la figure 1.

Le cadre 7 est réalisé en mousse de polypropylène et est solidarisé à la grille de sortie 2 ou à la grille d'entrée 5, et de préférence aux deux grilles 2 et 5 quand toutes les deux sont prévues.

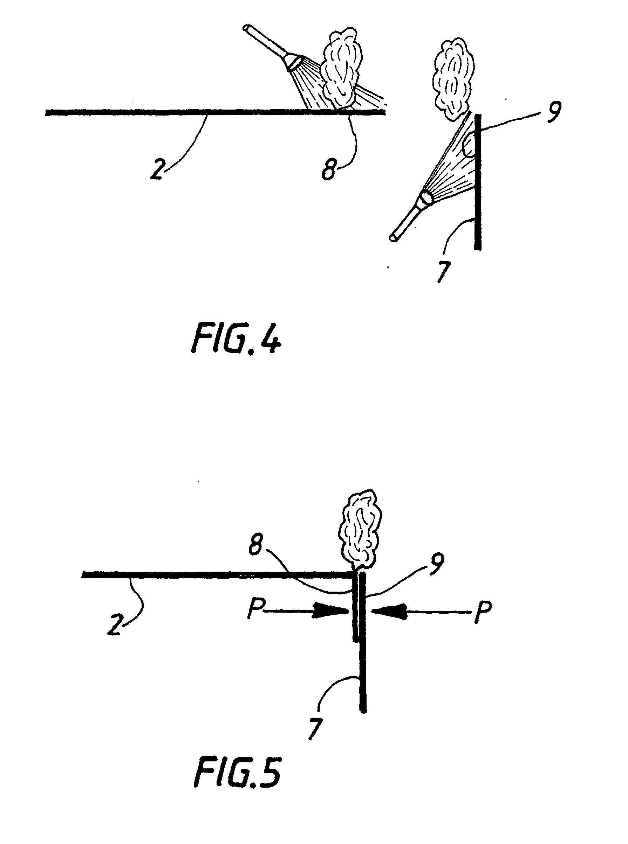

La solidarisation d'une grille 2 ou 5 au cadre 7 s'effectue selon une caractéristique de l'invention, comme symbolisé aux figures 4 et 5, par une opération dite de soudure miroir qui consiste à chauffer simultanément jusqu'au début de fusion une partie périphérique 8 de la grille 2 ou 5 d'une part, et une portion 9 du cadre 7 correspondant à la zone de fixation d'autre part, puis à rapprocher et serrer l'une contre l'autre la partie périphérique 8 et la portion 9 précitées de manière à exercer une pression relative symbolisée par les flèches P de la figure 5.

L'opération de soudure miroir est conduite de telle manière que l'extrémité latérale 8 de la grille 2 ou 5 soit amenée à se plier à angle droit pour épouser la face interne correspondante du cadre 7, ce qui a pour avantages d'assurer une meilleure fixation de la grille et d'éviter toute fuite d'air entre grille et cadre.

Avantageusement, plusieurs parties périphériques 8 et portions 9 correspondantes, et de préférence toutes les quatre, de la grille 2 ou 5 et du cadre 7 sont ainsi fixées entre elles.

Comme représenté sur la figure 3, les deux grilles 2 et 5 sont fixées au cadre 7 de la manière qui vient d'être décrite.

La même nature chimique (polypropylène) de la grille 2 ou 5 et du cadre 7 permet une fixation solide et durable.

Lors de l'opération de soudure miroir, le ou les mats de non tissé sont apposés contre la ou les grilles 2 et/ou 5 correspondantes avec, le cas échéant, interposition de la manière décrite précédemment, de moyens d'absorption 4 tels que, de préférence, tissu de carbone.

Selon un aspect important de l'invention, les moyens d'absorption 4, de préférence sous la forme d'un tissu de carbone activé, présentent sur un côté au moins, et avantageusement sur les quatre côtés, une étendue inférieure à celle de la grille 2 et/ou 5 ainsi que, de préférence, du média filtrant 3 et/ou 6. Ceci est visible à la figure 3 où l'on peut voir que les dimensions du tissu de carbone activé 4 sont inférieures à celle des grilles 2 et 5 et des médias filtrants 3 et 6.

De la sorte, les moyens d'absorption sont écartés du cadre 7. Ceci présente l'avantage que la présence des moyens d'absorption ne perturbe pas la fixation des grilles au cadre et que lors de la récupération d'un filtre usagé, il est possible aisément en sectionnant la ou les grilles de récupérer les moyens d'absorption, qui constituent un élément important dans le prix de revient d'un filtre, afin de les régénérer en vue de leur réemploi dans un nouveau filtre.

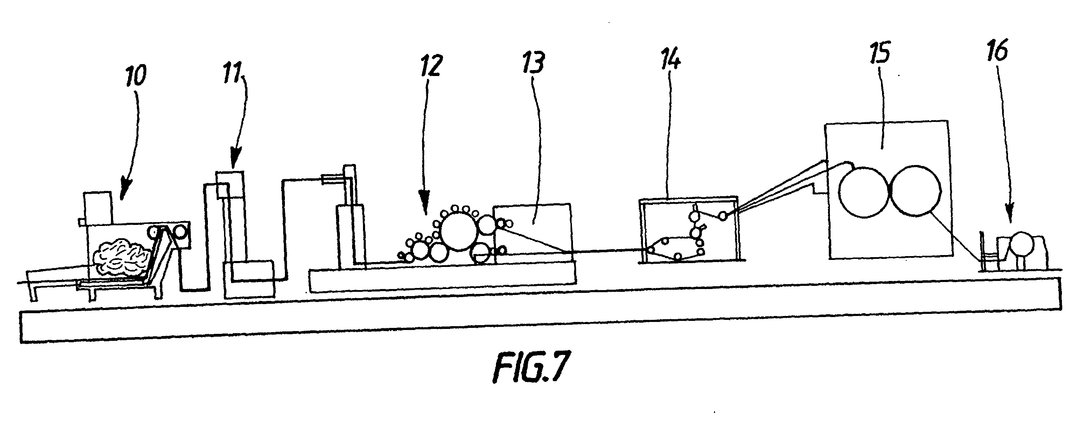

Grâce à la constitution ainsi décrite du filtre, celui-ci présente des caractéristiques intéressantes de souplesse qui permettent de le courber momentanément, comme montré aux figures 6a et 6b, voire même de le vriller, afin d'introduire plus facilement le filtre dans un appareil de chauffage et/ou ventilation et/ou climatisation de véhicule automobile, ou de l'en extraire. Ceci est particulièrement avantageux lorsque, comme c'est très souvent le cas, l'accessibilité au logement du filtre est difficile.

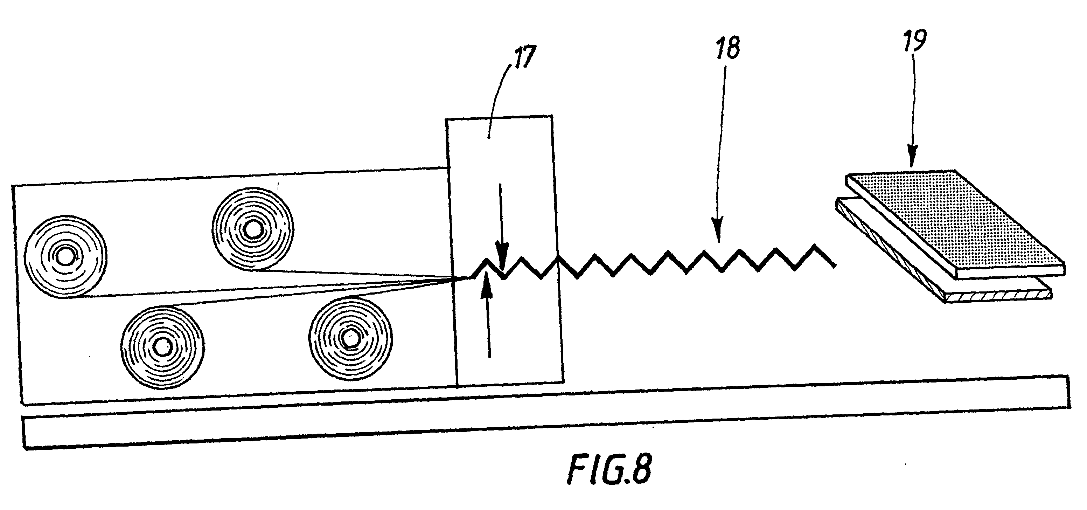

Les figures 7 et 8 illustrent un procédé préférentiel de fabrication d'un média filtrant 3,6 d'un dispositif de filtration décrit précédemment.

Des fibres de polypropylène d'une finesse de 1,7 dtex (diamètre 14 µm) sont coupées à une longueur de 40 mm puis introduites dans un mélangeur.

Le mélange de fibres obtenu est ensuite introduit dans une démoteuse 10 puis dans un silo de stockage 11 avant d'être cardé au moyen d'une carde de type laine 12 à double peigneur équipée d'un brouilleur de type pêle-mêle afin d'obtenir un voile de carde isotrope.

Le voile est, en sortie de carde, introduit dans un condenseur 13 pour former une nappe.

Les paramètres de la carde et du condenseur sont choisis de manière à obtenir une nappe présentant une masse surfacique d'environ 20 à environ 150 g/m².

La nappe est déposée sur un tapis puis consolidée par une opération de liage hydraulique en 14.

L'opération de liage hydraulique consiste à faire traverser la nappe disposée sur un tambour rotatif par des jets d'eau très fins sous haute pression (40 à 200 bars).

En rebondissant sur le tambour, les jets d'eau provoquent un nouage des fibres conférant à la nappe une résistance mécanique importante sans pour autant en augmenter, de manière conséquente, la densité.

Après passage dans un tunnel de séchage 15, la nappe est enroulée en 16.

La nappe est ensuite reprise pour subir une opération de plissage en 18 et se trouve alors prête à être montée sur un support pour former le dispositif de filtration comme indiqué précédemment.

Le média filtrant 3,6 du dispositif de filtration comporte une nappe en une seule couche.

De la sorte, avec une nappe de 0,84 mm d'épaisseur, on a pu former un filtre présentant une masse surfacique de 66 g/m² et de densité 0,07.

Pour tester l'efficacité du filtre ainsi réalisé, on a placé ce dernier en travers d'une veine de section égale à 100 cm², parcourue par un courant d'air chargé de particules à une vitesse de 20 cm/s.

Les particules correspondent à une poudre dite « poudre SAE fine » qui est définie par la norme des Etats-Unis d'Amérique, référence SAE J 726 / ISO 5011.

La concentration de particules est de 100 mg/m³.

On constate, d'une part, que la perte de charge au travers du filtre n'est, dans ces conditions, que de 14 Pa et que, d'autre part, l'efficacité atteint 80 %.

Par rapport aux dispositifs de filtration actuellement sur le marché, on a obtenu une efficacité comparable aux meilleurs d'entre eux avec un produit d'une densité beaucoup plus faible (0,07 contre 0,12 à 0,30) et engendrant une perte de charge nettement plus faible.

Des tests d'endurance ont en outre démontré une plus grande stabilité dans le temps de l'efficacité du dispositif de filtration selon l'invention.

## Revendications

1. Dispositif de filtration destiné à équiper un appareil d'aération et/ou de chauffage et/ou de climatisation, plus particulièrement pour un véhicule comportant un cadre souple (7) et un média filtrant (3,6) plissé formant filtre à particules, **caractérisé en ce qu'**il comporte une grille (2, 5) souple plissée contre laquelle est disposé le média filtrant (3,6) et **en ce que** le cadre (7)souple entoure la grille souple (2,5) et est solidarisé à la grille (2,5) par soudure miroir en sorte que le dispositif de filtration est susceptible d'être déformé temporairement dans tous les sens lors de son insertion, ou de son retrait, dans un appareil d'aération et/ou de chauffage et /ou de climatisation.

2. Dispositif de filtration selon la revendication 1, **caractérisé en ce que** la grille (2, 5) est réalisée en polypropylène.

3. Dispositif de filtration selon la revendication 1 ou 2, **caractérisé en ce que** le cadre (7) est en polypropylène.

4. Dispositif de filtration selon l'une quelconque des revendications précédentes, **caractérisé en ce que** le cadre (7) est en matériau mousse ou alvéolaire.

5. Dispositif de filtration selon l'une quelconque des revendications précédentes, **caractérisé en ce que** le média filtrant (3, 6) comprend un mat de non tissé (3, 6) constitué d'un voile de carde.

6. Dispositif de filtration selon la revendication 5, **caractérisé en ce que** ledit mat de non tissé (3, 6) constitué d'un voile de carde est appliqué contre ladite grille (2, 5) sans lui être solidarisé.

7. Dispositif de filtration selon la revendication 6, **caractérisé en ce que** ledit voile de carde (3, 6) forme une nappe unique.

8. Dispositif de filtration selon la revendication 7, **caractérisé en ce que** ledit voile de carde (3, 6) est placé en amont de la grille (2, 5) en considérant le sens normal (F) de passage du gaz à filtrer.

9. Dispositif de filtration selon l'une quelconque des revendications précédentes, **caractérisé en ce qu'**il comporte des moyens d'absorption de gaz (4) placés entre la grille (2, 5) et ledit mat de non tissé (3, 6).

10. Dispositif de filtration selon la revendication 9, **caractérisé en ce que** lesdits moyens d'absorption (4) comportent un tissu de carbone activé.

11. Dispositif de filtration selon la revendication 10, **caractérisé en ce que** ledit tissu de carbone activé est souple.

12. Dispositif de filtration selon la revendication 9, **caractérisé en ce que** lesdits moyens d'absorption (4) comportent un lit de charbon activé.

13. Dispositif de filtration selon l'une des revendications 9 à 12, **caractérisé en ce qu'**un mat de non tissé (3, 6) constitué d'un voile de carde est disposé de part et d'autre des moyens d'absorption (4).

14. Dispositif de filtration selon l'une quelconque des revendications précédentes, **caractérisé en ce qu'**une seconde grille (5), dite grille d'entrée, est disposée en amont du mat de non tissé (3, 6).

15. Dispositif de filtration selon la revendication 14, **caractérisé en ce que** les deux grilles (2, 5) sont de même nature.

16. Dispositif de filtration selon la revendication 14 ou 15 prises en combinaison avec la revendication 10, **caractérisé en ce que** les grilles (2,5) et le tissu de carbone activé (4) sont plissés.

17. Dispositif de filtration selon l'une quelconque des revendications 10 à 16, **caractérisé en ce qu'**une partie au moins des dimensions du tissu de carbone (4), et de préférence toutes, sont inférieures à celles correspondantes de la ou des grille(s) (2, 5) ainsi qu'à celles du cadre (7) en sorte que, pour un côté au moins du tissu de carbone (4), celui-ci est, au moins partiellement, écarté du cadre (7).

18. Dispositif de filtration selon l'une quelconque des revendications 5 à 17, **caractérisé en ce que** le mat de non tissé (3, 6) est à base de fibres longues dont la longueur est, de préférence, au moins égale à 38 mm.

19. Dispositif de filtration selon la revendication 18, **caractérisé en ce que** lesdites fibres longues présentent un diamètre moyen égal ou supérieur à 10 µm.

20. Dispositif de filtration selon la revendication 18 ou 19, **caractérisé en ce que** lesdites fibres longues sont en matériau thermoplastique.

21. Dispositif de filtration selon la revendication 19, **caractérisé en ce que** lesdites fibres longues sont des fibres de polypropylène.

22. Dispositif de filtration selon l'une quelconque des revendications 18 à 21, **caractérisé en ce que** les fibres longues sont nouées par une opération de liage hydraulique.

23. Dispositif de filtration selon l'une quelconque des revendications précédentes prises en combinaison avec la revendication 14, **caractérisé en ce que** le cadre (7) est solidarisé à la grille de sortie (2) et à la grille d'entrée (5) par soudure miroir.

24. Dispositif de filtration selon la revendication 23, **caractérisé en ce que** tout ou partie des extrémités latérales (8) de la grille d'entrée (2) et/ou de la grille de sortie (5) sont recourbées de manière à suivre la ou les parois correspondantes du cadre (7).

25. Dispositif de filtration selon l'une des revendications 14 à 24, **caractérisé en ce qu'**il présente une construction symétrique et **en ce qu'**il est réversible.

26. Dispositif selon l'une quelconque des revendications précédentes, **caractérisé en ce que** le cadre (7) est solidarisé à certaines parties périphériques (8) de la ou des grille(s).

## Claims

1. A filter device for equipping an apparatus for ventilating and/or heating and/or air conditioning, more particularly for a vehicle, comprising a flexible frame (7) and a pleated filter medium (3, 6) constituting a particle filter, **characterised in that** it comprises a flexible pleated grid (2, 5) against which the filter medium (3, 6) is disposed, and **in that** the flexible frame (7) surrounds the flexible grid (2, 5) and is fixed to the grid (2, 5) by mirror welding, in such a way that the filter device is able to be deformed temporarily in all directions while being inserted in or removed from an apparatus for ventilating and/or heating and/or air conditioning.

2. A filter device according to Claim 1, **characterised in that** the grid (2, 5) is made of polypropylene.

3. A filter device according to Claim 1 or Claim 2, **characterised in that** the frame (7) is of polypropylene.

4. A filter device according to any one of the preceding Claims, **characterised in that** the frame (7) is of foamed or porous material.

5. A filter device according to any one of the preceding Claims, **characterised in that** the filter medium (3, 6) comprises a mat of non-woven material (3, 6) consisting of a carded web.

6. A filter device according to Claim 5, **characterised in that** the said non-woven mat (3, 6) consisting of a carded web is applied against the said grid (2, 5) without being fixed to the latter.

7. A filter device according to Claim 6, **characterised in that** the said carded web (3, 6) constitutes a single fabric layer.

8. A filter device according to Claim 7, **characterised in that** the said carded web (3, 6) is placed upstream of the grid (2, 5) in relation to the normal direction (F) of flow of the gas to be filtered.

9. A filter device according to any one of the preceding Claims, **characterised in that** it includes gas absorption means (4) placed between the grid (2, 5) and the said non-woven mat (3, 6).

10. A filter device according to Claim 9, **characterised in that** the said absorption means (4) comprise an activated carbon tissue.

11. A filter device according to Claim 10, **characterised in that** the said activated carbon tissue is flexible.

12. A filter device according to Claim 9, **characterised in that** the said absorption means (4) comprise a bed of activated carbon.

13. A filter device according to one of Claims 9 to 12, **characterised in that** a mat of non-woven material (3, 6), consisting of a carded web, is disposed on either side of the absorption means (4).

14. A filter device according to any one of the preceding Claims, **characterised in that** a second grid (5), being a so-called inlet grid, is disposed upstream of the mat (3, 6) of non-woven material.

15. A filter device according to Claim 14, **characterised in that** both grids (2, 5) are of the same nature.

16. A filter device according to Claim 14 or Claim 15 taken in combination with Claim 10, **characterised in that** the grids (2, 5) and the activated carbon tissue (4) are pleated.

17. A filter device according to any one of Claims 10 to 16, **characterised in that** at least one of the dimensions of the carbon tissue (4), and preferably each of them, is smaller than the corresponding dimension of the grid or grids (2,5) and of the frame (7), so that on at least one side of the carbon tissue (4), the latter is at least partially spaced away from the frame (7).

18. A filter device according to any one of Claims 5 to 17, **characterised in that** the mat (3, 6) of non-woven material is based on long fibres, the length of which is preferably equal to at least 38 mm.

19. A filter device according to Claim 18, **characterised in that** the said long fibres have a mean diameter which is equal to or greater than 10 µm.

20. A filter device according to Claim 18, **characterised in that** the said long fibres are of thermoplastic material.

21. A filter device according to Claim 19, **characterised in that** the said long fibres are polypropylene fibres.

22. A filter device according to any one of Claims 18 to 21, **characterised in that** the long fibres are knotted by a hydraulic tying operation.

23. A filter device according to any one of the preceding Claims taken in combination with Claim 14, **characterised in that** the frame (7) is fixed to the output grid (2) and input grid (5) by mirror welding.

24. A filter device according to Claim 23, **characterised in that** all or some of the lateral ends (8) of the inlet grid (2) and/or outlet grid (5) are curved in such a way as to follow the corresponding wall or walls of the frame (7).

25. A filter device according to one of Claims 14 to 24, **characterised in that** it is of symmetrical construction, and **in that** it is reversible.

26. A device according to any one of the preceding Claims, **characterised in that** the frame (7) is fixed to certain peripheral portions (8) of the grid or grids.

## Patentansprüche

1. Filtereinrichtung zur Ausrüstung einer Belüftungs- und/oder Heizungs- und/oder Klimaanlage, insbesondere für Kraftfahrzeuge, die einen biegsamen Rahmen (7) und ein als Partikelfilter dienendes gefaltetes Filtermedium (3, 6) umfaßt,
**dadurch gekennzeichnet,**
**daß** sie ein gefaltetes biegsames Gitter (2, 5) enthält, gegen welches das Filtermedium (3, 6) angeordnet ist,
und **daß** der biegsame Rahmen (7) das biegsame Gitter (2, 5) umgibt und durch Spiegel-Schweißen fest mit dem Gitter (2, 5) verbunden ist, so daß die Filtereinrichtung bei ihrem Einsetzen in oder bei ihrem Herausnehmen aus einer Belüftungs- und/oder Heizungs- und/oder Klimaanlage vorübergehend in allen Richtungen verformt werden kann.

2. Filtereinrichtung nach Anspruch 1, **dadurch gekennzeichnet, daß** das Gitter (2, 5) aus Polypropylen ausgeführt ist.

3. Filtereinrichtung nach Anspruch 1 oder 2, **dadurch gekennzeichnet, daß** der Rahmen (7) aus Polypropylen besteht.

4. Filtereinrichtung nach einem der vorangehenden Ansprüche, dadurch gekennezeichnet, daß der Rahmen (7) aus Schaumstoff oder aus porösem Stoff besteht.

5. Filtereinrichtung nach einem der vorangehenden Ansprüche, dadurch gekennezeichnet, daß das Filtermedium (3, 6) eine Faservliesmatte (3, 6) umfaßt, die aus einem Krempelvlies besteht.

6. Filtereinrichtung nach Anspruch 5, **dadurch gekennzeichnet, daß** die besagte aus einem Krempelvlies bestehende Faservliesmatte (3, 6) gegen das besagte Gitter (2, 5) angedrückt wird, ohne fest damit verbunden zu sein.

7. Filtereinrichtung nach Anspruch 6, **dadurch gekennzeichnet, daß** das besagte Krempelvlies (3, 6) eine einheitliche Lage bildet.

8. Filtereinrichtung nach Anspruch 7, **dadurch gekennzeichnet, daß** das besagte Krempelvlies (3, 6) vor dem Gitter (2, 5) bezogen auf die normale Durchgangsrichtung (F) des zu filternden Gases angebracht ist.

9. Filtereinrichtung nach einem der vorangehenden Ansprüche, **dadurch gekennzeichnet, daß** sie Gasabsorptionsmittel (4) umfaßt, die zwischen dem Gitter (2, 5) und der besagten Faservliesmatte (3, 6) angebracht sind.

10. Filtereinrichtung nach Anspruch 9, **dadurch gekennzeichnet, daß** die besagten Absorptionsmittel (4) ein Aktivkohlenstoffgewebe umfassen.

11. Filtereinrichtung nach Anspruch 10, **dadurch gekennzeichnet, daß** das besagte Aktivkohlenstoffgewebe biegsam ausgeführt ist.

12. Filtereinrichtung nach Anspruch 9, **dadurch gekennzeichnet, daß** die besagten Absorptionsmittel (4) ein Aktivkohlebett umfassen.

13. Filtereinrichtung nach einem der Ansprüche 9 bis 12, **dadurch gekennzeichnet , daß** eine aus einem Krempelvlies bestehende Faservliesmatte (3, 6) beiderseits der Absorptionsmittel (4) angeordnet ist.

14. Filtereinrichtung nach einem der vorangehenden Ansprüche, **dadurch gekennzeichnet, daß** ein als Einlaßgitter bezeichnetes zweites Gitter (5) vor der Faservliesmatte (3, 6) angeordnet ist.

15. Filtereinrichtung nach Anspruch 14, **dadurch gekennzeichnet, daß** die beiden Gitter (2, 5) die gleiche Beschaffenheit aufweisen.

16. Filtereinrichtung nach Anspruch 14 oder 15 in Rombination mit Anspruch 10, **dadurch gekennzeichnet , daß** die Gitter (2, 5) und das Aktivkohlenstoffgewebe (4) gefaltet sind.

17. Filtereinrichtung nach einem der Ansprüche 10 bis 16, **dadurch gekennzeichnet, daß** wenigstens ein Teil der Abmessungen des Kohlenstoffgewebes (4), und vorzugsweise alle, kleiner als die entsprechenden Abmessungen des oder der Gitter (2, 5) sowie als die Abmessungen des Rahmens (7) sind, so daß bei wenigstens einer Seite des Kohlenstoffgewebes (4) dieses zumindest teilweise zum Rahmen (7) beabstandet ist.

18. Filtereinrichtung nach einem der Ansprüche 5 bis 17, **dadurch gekennzeichnet , daß** die Faservliesmatte (3, 6) auf der Basis von Langfasern ausgeführt ist, deren Länge vorzugsweise mindestens gleich 38 mm ist.

19. Filtereinrichtung nach Anspruch 18, dadurch gekennezeichnet, daß die besagten Langfasern einen mittleren Durchmesser größer oder gleich 10 µm aufweisen.

20. Filtereinrichtung nach Anspruch 18 oder 19, **dadurch gekennzeichnet, daß** die besagten Fasern aus Thermoplast bestehen.

21. Filtereinrichtung nach Anspruch 19, **dadurch gekennzeichnet, daß** die besagten Fasern Polypropylenfasern sind.

22. Filtereinrichtung nach einem der Ansprüche 18 bis 21, **dadurch gekennzeichnet, daß** die besagten Langfasern durch einen hydraulischen Bindungsvorgang gebunden sind.

23. Filtereinrichtung nach einem der vorangehenden Ansprüche in Kombination mit Anspruch 14, **dadurch gekennzeichnet, daß** der Rahmen (7) durch Spiegel-Schweißen fest mit dem Auslaßgitter (2) und mit dem Einlaßgitter (5) verbunden ist.

24. Filtereinrichtung nach Anspruch 23, **dadurch gekennzeichnet, daß** die seitlichen Enden (8) des Einlaßgitters (2) und/oder des Auslaßgitters (5) insgesamt oder teilweise gekrümmt sind, um der oder den entsprechenden Wänden des Rahmens (7) zu folgen.

25. Filtereinrichtung nach einem der Ansprüche 14 bis 24, **dadurch gekennzeichnet , daß** sie eine symmetrische Konstruktion aufweist und daß sie umkehrbar ausgeführt ist.

26. Filtereinrichtung nach einem der vorangehenden Ansprüche, **dadurch gekennzeichnet, daß** der Rahmen (7) fest mit bestimmten Umfangsteilen (8) des oder der Gitter verbunden ist.
